(19) Europäisches Patentamt
European Patent Office
Office européen des brevets

(11) **EP 4 678 928 B1**

(12) **EUROPEAN PATENT SPECIFICATION**

(45) Date of publication and mention of the grant of the patent:
**19.08.2026 Bulletin 2026/34**

(21) Application number: **25183007.1**

(22) Date of filing: **16.06.2025**

(51) International Patent Classification (IPC):
***F16C 9/02*** (2006.01) ***F16C 9/03*** (2006.01)
***F16C 9/06*** (2006.01) ***F16C 17/02*** (2006.01)
***F16C 17/22*** (2006.01) ***F16C 33/04*** (2006.01)
***F16C 33/20*** (2006.01)

(52) Cooperative Patent Classification (CPC):
**F16C 9/02; F16C 9/03; F16C 9/06; F16C 17/022; F16C 17/22; F16C 33/046; F16C 33/205; F16C 33/206;** F16C 2202/06; F16C 2202/22; F16C 2360/22

(54) **BEARING APPARATUS FOR CRANKSHAFT OF INTERNAL COMBUSTION ENGINE**
LAGERVORRICHTUNG FÜR DIE KURBELWELLE EINES VERBRENNUNGSMOTORS
DISPOSITIF DE PALIER POUR VILEBREQUIN DE MOTEUR À COMBUSTION INTERNE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **09.07.2024 JP 2024110172**

(43) Date of publication of application:
**14.01.2026 Bulletin 2026/03**

(73) Proprietor: **Daido Metal Company Ltd.**
**Nagoya 460-0000 (JP)**

(72) Inventor: **KOMURO, Soichiro**
**Inuyama-shi, Aichi (JP)**

(74) Representative: **Kraus & Lederer PartGmbB**
**Thomas-Wimmer-Ring 15**
**80539 München (DE)**

(56) References cited:
**JP-A- 2015 200 339**
**US-A1- 2010 166 349**
**US-A1- 2010 166 350**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 678 928 B1

## Description

BACKGROUND OF THE INVENTION

(1) Field of the Invention

The present invention relates to a bearing apparatus for supporting a crankshaft of an internal combustion engine, as for example known from US 2010/166350 A1.

(2) Description of Related Art

A crankshaft of an internal combustion engine is supported, at a journal portion thereof, by a cylinder block lower portion of an internal combustion engine via a main bearing consisting of a pair of half bearings. For lubrication of the main bearing, lubrication oil discharged by an oil pump is fed into a lubrication oil groove formed along an inner peripheral surface of the main bearing from an oil gallery formed within a cylinder block wall through a through-hole formed in a wall of the main bearing. A first lubrication oil passage is formed to penetrate the journal portion in a diametrical direction thereof, so that two end openings of the first lubrication oil passage communicate with the lubrication oil groove of the main bearing. Further, a second lubrication oil passage passing through a crank arm portion is formed so as to branch from the first lubrication oil passage of the journal portion, and this second lubrication oil passage communicates with a third lubrication oil passage formed to penetrate a crankpin in a diametrical direction thereof. Consequently, the lubrication oil fed into the lubrication oil groove formed in the inner peripheral surface of the main bearing from the oil gallery in the cylinder block wall through the through-hole is supplied to between slide surfaces of a crankpin and a connecting rod bearing consisting of a pair of half bearings, from a discharge opening which opens at an end of the third lubrication oil passage, through the first lubrication oil passage, the second lubrication oil passage and the third lubrication oil passage (e.g. see JP H08-277831 A (Patent Literature 1)). In this way, the oil is supplied to between the surface of the crankshaft and the slide surfaces of the main bearing and the connecting rod bearing.

A split-type slide bearing for a crankshaft of an internal combustion engine is formed into a cylindrical shape by installing a pair of half bearings in a bearing housing, i.e., in a housing split body which is a part of an engine block and in a housing split body which is a bearing cap. A bearing holding hole of the bearing housing is processed to be a perfect circle by a single operation while a pair of housing split bodies is fastened with a bolt before the pair of half bearings are installed therein.

In recent years, in internal combustion engines for passenger vehicles, an engine block made of an aluminum alloy is generally used for lighter weight of the internal combustion engines. In this case, a split-type bearing housing for a crankshaft is generally a combination of one housing split body which is a part of the engine block made of an aluminum alloy, and another housing split body which is a bearing cap made of an iron alloy.

Meanwhile, a half bearing of a split-type slide bearing for a crankshaft is generally consisting of a steel back metal and a bearing alloy layer. The circumferential length of the outer peripheral surface of the split-type slide bearing for a crankshaft consisting of a pair of half bearings is formed to be a circumferential length larger than the circumferential length of the inner peripheral surface of a bearing holding hole of a split-type bearing housing. Due to this dimensional relationship, when the pair of half bearings are installed in the split-type bearing housing, compressive stress in a circumferential direction is generated and radial stress is also generated in the pair of half bearings. Consequently, the pair of half bearings are fixed in close contact with the inner peripheral surface of the bearing holding hole of the split-type bearing housing, the split-type bearing housing is elastically deformed and radially expands, and the inside diameter of the bearing holding hole increases.

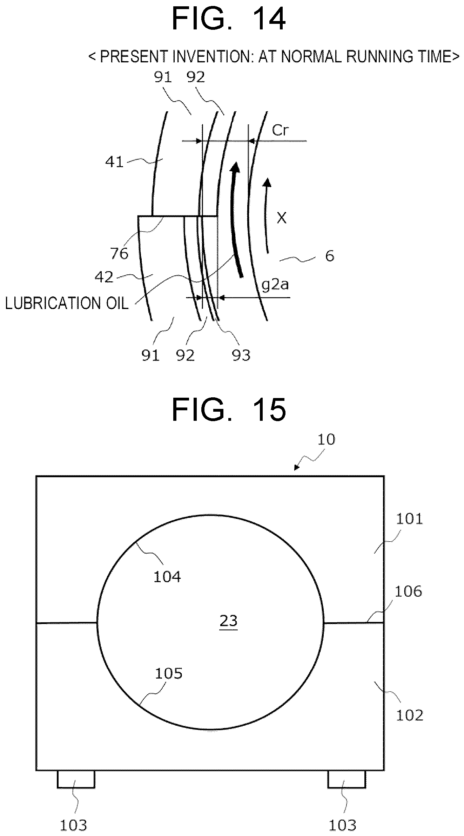

Here, the relationship between the split-type bearing housing and a split-type slide bearing for a crankshaft consisting of a pair of half bearings to be incorporated in the split-type bearing housing is described with reference to Figs. 15, 16, 18, and 19.

Fig. 15 illustrates a split-type bearing housing 10 for a crankshaft, and the split-type bearing housing 10 is formed with a cylinder block lower portion 101 which is a part of an engine block and a bearing cap 102 (e.g. made of an iron alloy). With the bearing cap 102 mounted on the cylinder block lower portion 101 by bolts 103, a bearing holding hole 23 having a perfect-circle shape in cross section is formed by machining at a room temperature. The subsequent bearing apparatus assembling operation is performed by removing the bolts 103 from the bearing housing 10, mounting half bearings 141 and 142 forming a split-type slide bearing along inner peripheral surfaces 104 and 105 of the bearing holding hole 23, and again fastening the cylinder block lower portion 101 to the bearing cap 102 by the bolts 103.

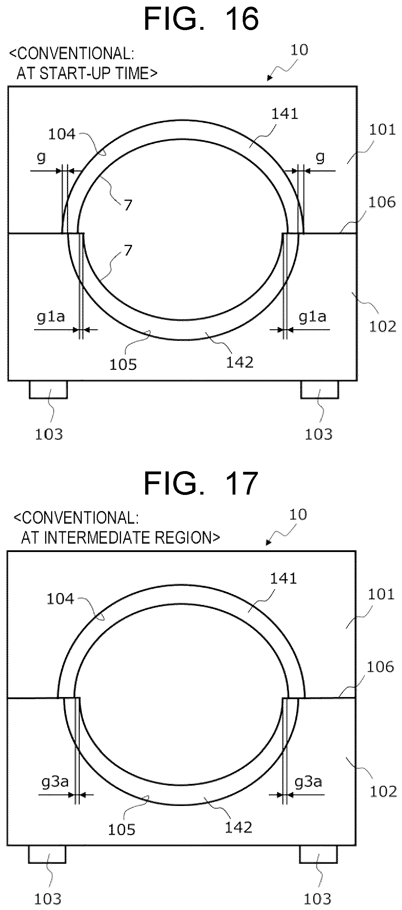

In the split-type bearing housing 10 which is lowered in rigidity and is used for various purposes in recent years, an expansion and deformation amount of the inside diameter of the split-type bearing housing increases if fastening by the bolts 103 is performed in such a way that the same degree of stress as conventional is generated in the split-type slide bearing in order to fit and fix the split-type slide bearing. Further, since the cylinder block lower portion 101 and the bearing

cap 102 which constitute the split-type bearing housing are different in rigidity from each other, the difference of the expansion and deformation amounts is generated between the inner peripheral surfaces 104 and 105 due to stress of fixing the split-type slide bearing, which emerges as a gap g between the inner peripheral surfaces 104 and 105 in a fastening plane 106 (a split surface of a split-type bearing housing) between the cylinder block lower portion 101 and the bearing cap 102, and a gap g1a is also generated on bearing inner peripheral surfaces 7 of the half bearings 141 and 142 (see Fig. 16).

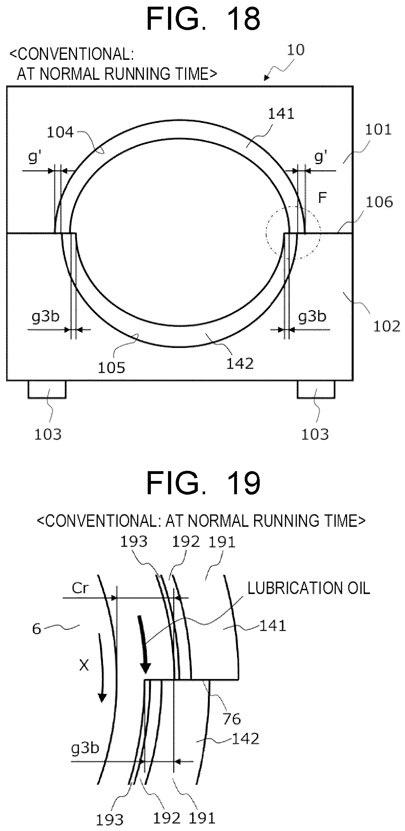

Moreover, in this split-type bearing housing, when the temperature rises due to the running of the internal combustion engine and reaches a temperature in a normal running state, the inside diameter of the housing split body 101 on the engine block side made of an aluminum alloy having a relatively high thermal expansion coefficient becomes larger than the inside diameter of the housing split body 102 on the bearing cap side made of an iron alloy having a relatively low thermal expansion coefficient because the aluminum alloy and the iron alloy have different thermal expansion coefficients. Thus, as illustrated in Fig. 18, the difference of the thermal expansion amounts is added to the difference of the expansion and deformation amount, so that in the fastening plane 106, a gap g' is generated between the inner peripheral surfaces 104 and 105 of the bearing holding hole, and a gap g3b is also generated on the bearing inner peripheral surfaces 7 of the half bearings 141 and 142.

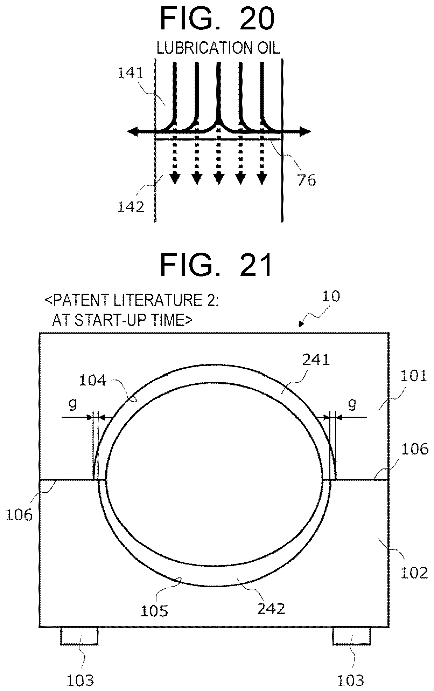

Meanwhile, in internal combustion engines in recent years, the amount of lubrication oil supply to the inner peripheral surface of a split-type slide bearing for a crankshaft has been decreased due to the reduced size of oil pumps. Accordingly, a smaller bearing clearance is set in order to decrease the leakage amount of lubrication oil from the bearing clearance between the inner peripheral surface of a slide bearing for a crankshaft and the surface of a crankshaft 6. However, in a normal running state, if the gap g3b which is relatively large relative to a bearing clearance Cr is generated on a bearing inner peripheral surface in a fastening plane between the cylinder block lower portion 101 and the bearing cap 102 as illustrated in Fig. 18, the ratio of the gap area, which becomes a barrier to lubrication oil flow, to the flow path sectional area of lubrication oil becomes relatively high in comparison with the conventional case where a large bearing clearance is set (see Fig. 19), and a wiping phenomenon of the lubrication oil due to the gap g3b occurs (see Fig. 20), with the result that the leakage amount of lubrication oil increases, and deficiency in supply of lubrication oil to a bearing slide surface increasingly occurs.

JP 2010-156373 A (Patent Literature 2) teaches the gap g in the split-type bearing housing having housing split bodies different in rigidity from each other, where the difference of bearing thickness is set at abutment end faces of a pair of half bearings so as to countervail or eliminate a gap generated on a bearing inner peripheral surface due to the rigidity difference of the housing split bodies when the pair of half bearings are installed in the split-type bearing housing.

Moreover, JP 2010-156374 A (Patent Literature 3) teaches the gap g' in the split-type bearing housing having housing split bodies different in thermal expansion coefficient from each other, where the difference of bearing thickness is set at abutment end faces of a pair of half bearings so as to countervail or eliminate a gap generated on a bearing inner peripheral surface due to the thermal expansion coefficient difference of the split-type bearing housings when the temperature of the split-type bearing housing rises due to running of an internal combustion engine.

## BRIEF SUMMARY OF THE INVENTION

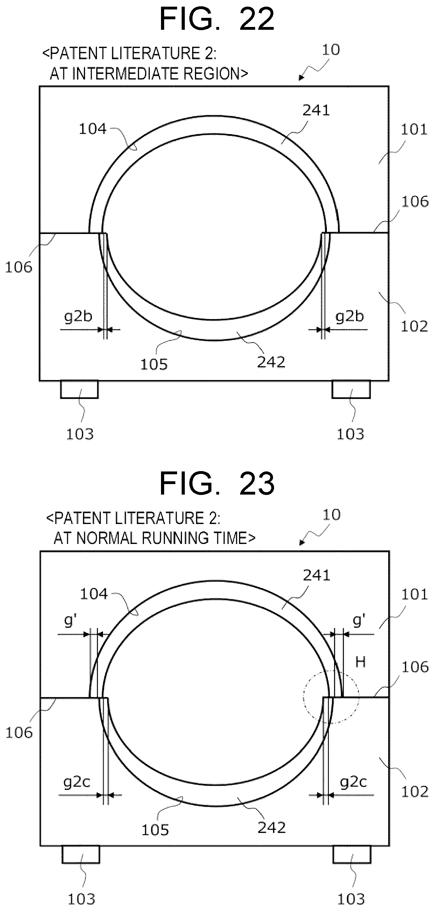

JP 2010-156373 A teaches a means for countervailing a gap g1a generated on a bearing inner peripheral surface in abutment end faces of a half bearing at the time (start-up time) when a pair of half bearings are installed in a pair of housing split bodies of a split-type bearing housing having the difference in rigidity (see Fig. 21). However, JP 2010-156373 A gives no consideration to the problem of the occurrence of a wiping phenomenon of lubrication oil caused when a pair of half bearings are installed in a pair of housing split bodies having the difference in thermal expansion coefficient, then the temperature of the split-type bearing housing rises due to the running of the internal combustion engine, whereby a gap g2a due to the difference in thermal expansion amount is generated in the abutment end faces of the half bearing in an intermediate temperature region between start-up time and normal running (see Fig. 22), and a comparatively large gap g2b compared to the bearing clearance Cr is generated in the abutment end face of the half bearing at the temperature during the normal running time (see Fig. 23).

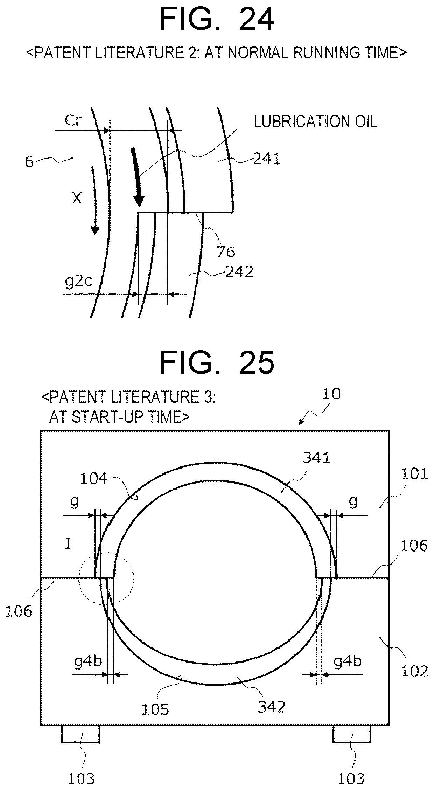

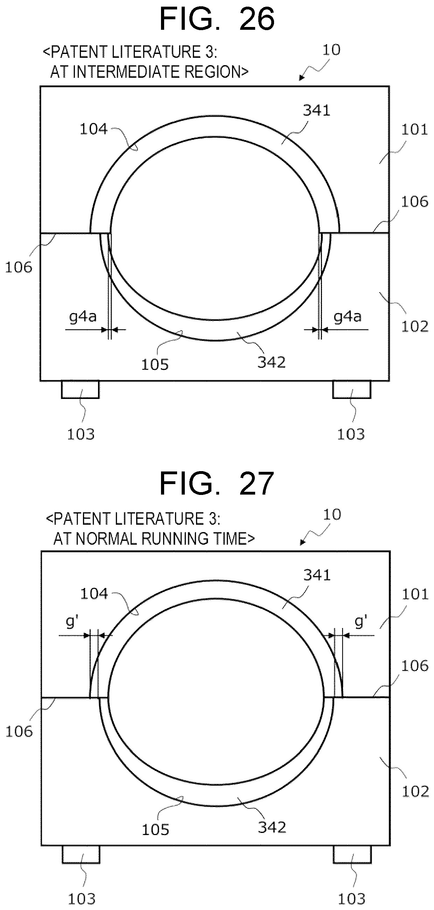

JP 2010-156374 A teaches a means for countervailing a gap generated when the temperature of a split-type bearing housing rises due to the running of an internal combustion engine (during normal running time) due to a gap g4b (see Fig. 25) generated by the difference of bearing thickness on a bearing inner peripheral surface in the abutment end face of the half bearing at the time (start-up time) when a pair of half bearings are installed in a pair of housing split bodies which constitute the split-type bearing housing for a crankshaft of an internal combustion engine (see Fig. 27). However, JP 2010-156374 A gives no consideration to the problem of the occurrence of a wiping phenomenon of lubrication oil caused when the temperature of the split-type bearing housing rises due to the running of the internal combustion engine, a gap g4a is generated because of the difference in thermal expansion amount of housing split bodies in an intermediate temperature region between start-up time and normal running (see Fig. 26), and the comparatively large gap g4b compared to the bearing clearance Cr is generated in the abutment end face of the half bearing at the temperature at start-

up time (see Fig. 25).

Therefore, an object of the present invention is to provide a split-type bearing apparatus for a crankshaft of an internal combustion engine in which a wiping phenomenon of lubrication oil due to the generation of a gap on a bearing inner peripheral surface does not easily occur in all periods from start-up time to normal running time of the internal combustion engine.

According to the present invention, there is provided a split-type slide bearing apparatus for a crankshaft of an internal combustion engine, including:

a cylindrical split-type slide bearing including a first half bearing and a second half bearing which are abutted on each other; and

a split-type bearing housing including a first housing split body to which the first half bearing is mounted, and a second housing split body to which the second half bearing is mounted, wherein a bearing holding hole for holding the split-type slide bearing is formed by fastening the first housing split body and the second housing split body, wherein

each of the first half bearing and the second half bearing includes a steel back metal layer, and a bearing alloy layer,

only the second half bearing of the first half bearing and the second half bearing includes a cover layer containing a synthetic resin and a solid lubricant,

the first housing split body is lower in rigidity than the second housing split body,

in an unmounted state where the split-type slide bearing is not mounted to the split-type bearing housing:

- the first half bearing and the second half bearing have outside diameters and widths equal to each other; and
- at symmetric positions with respect to an abutment plane (plane including axial end faces 76) provided when the first half bearing and the second half bearing are abutted on each other, the back metal layer and the bearing alloy layer of the first half bearing have thicknesses equal to those of the back metal layer and the bearing alloy layer of the second half bearing, respectively,

when the split-type slide bearing is mounted to the split-type bearing housing and the first housing split body and the second housing split body are fastened by a bolt, a gap is formed in the bearing holding hole in a radial direction within a fastening plane between the first housing split body and the second housing split body due to the difference in deformation amount between the first housing split body and the second housing split body generated based on the difference in rigidity, and

when each of the first and second housing split bodies is at a temperature in a range between 40°C and 80°C which range is an intermediate temperature region between start-up time and normal running time of the internal combustion engine, the second housing split body on a side of the second half bearing including the cover layer is higher in temperature than the first housing split body because the cover layer is lower in thermal conductivity than the back metal layer and the bearing alloy layer, whereby the first housing split body and the second housing split body are deformed to eliminate the gap within the fastening plane due to the difference in thermal expansion amount generated based on the difference in temperature.

The thickness of the cover layer of the second half bearing may be in a range between 2 μm and 12 μm.

Further, the thermal conductivity of the cover layer may be 3 W/m•°C or less.

BRIEF DESCRIPTION OF THE SEVERAL VIEWS OF THE DRAWINGS

Fig. 1 is a schematic view illustrating a bearing apparatus of a crankshaft of an internal combustion engine;

Fig. 2 is a view in which a large end housing of a connecting rod is axially seen;

Fig. 3 is a view in which a slide bearing according to a first embodiment of the present invention during an unmounted state is axially seen;

Fig. 4 is a view in which a first half bearing illustrated in Fig. 3 is seen from an inner peripheral surface side;

Fig. 5 is a sectional view along line A-A of the first half bearing illustrated in Fig. 3;

Fig. 6 is a plan view in which a second half bearing illustrated in Fig. 3 is seen from an inner peripheral surface side;

Fig. 7 is a sectional view along line B-B of the second half bearing illustrated in Fig. 5;

Fig. 8 is a front view illustrating a state where a split-type slide bearing for a crankshaft of an internal combustion engine according to Example 1 of the present invention is mounted to a split-type bearing housing consisting of bearing housings having the difference in rigidity;

Fig. 9 is an enlarged view of gap-formed portion C in Fig. 8;

Fig. 10 is a plan view in which the inner peripheral surface of the gap-formed portion in Fig. 9 is seen;

Fig. 11 is a front view of a state of the split-type slide bearing for a crankshaft of an internal combustion engine illustrated in Fig. 8 where the temperature of housing split bodies rises due to the running of the internal combustion engine, and abutment end faces of the half bearings are aligned at a certain temperature in an intermediate temperature region between start-up time and normal running;
Fig. 12 is an enlarged view of gap-formed portion D in Fig. 11;
Fig. 13 is a front view of a state of the split-type slide bearing for a crankshaft of an internal combustion engine illustrated in Fig. 8 where the temperature of the housing split bodies rises due to the running of the internal combustion engine, and becomes a temperature during normal running time;
Fig. 14 is an enlarged view of gap-formed portion E in Fig. 13;
Fig. 15 is an explanatory view illustrating a split-type bearing housing in an assembled state that consists of a pair of bearing housings having a rigidity difference;
Fig. 16 is a front view illustrating a state where a split-type slide bearing for a crankshaft of an internal combustion engine according to a prior art is mounted to a split-type bearing housing consisting of bearing housings having a rigidity difference;
Fig. 17 is a front view illustrating a state of the split-type slide bearing for a crankshaft of an internal combustion engine illustrated in Fig. 16, in an intermediate temperature region between start-up time and normal running in which the temperature of the housing split bodies rises due to the running of the internal combustion engine;
Fig. 18 is a front view illustrating a state of the split-type slide bearing for a crankshaft of an internal combustion engine illustrated in Fig. 16, in which the temperature of the housing split bodies rises due to the running of the internal combustion engine, and becomes a temperature during normal running time;
Fig. 19 is an enlarged view of gap-formed portion F in Fig. 18;
Fig. 20 is a plan view in which the inner peripheral surface of the gap-shaped portion in Fig. 19 is seen;
Fig. 21 is a front view illustrating a state of a split-type slide bearing for a crankshaft of an internal combustion engine according to JP 2010-156373 A that is mounted to a split-type bearing housing consisting of bearing housings having a rigidity difference;
Fig. 22 is a front view illustrating a state of the split-type slide bearing for a crankshaft of an internal combustion engine illustrated in Fig. 21, in an intermediate temperature region between start-up time and normal running in which the temperature of the housing split bodies rises due to the running of the internal combustion engine;
Fig. 23 is a front view illustrating a state of the split-type slide bearing for a crankshaft of an internal combustion engine illustrated in Fig. 21, in which the temperature of the housing split bodies rises due to the running of the internal combustion engine, and becomes a temperature during normal running time;
Fig. 24 is an enlarged view of gap-formed portion H in Fig. 23;
Fig. 25 is a front view illustrating a state of a split-type slide bearing for a crankshaft of an internal combustion engine according to JP 2010-156374 A that is mounted to a split-type bearing housing consisting of bearing housings having a rigidity difference;
Fig. 26 is a front view illustrating a state of the split-type slide bearing for a crankshaft of an internal combustion engine illustrated in Fig. 25, in an intermediate temperature region between start-up time and normal running in which the temperature of the housing split bodies rises due to the running of the internal combustion engine;
Fig. 27 is a front view illustrating a state of the split-type slide bearing for a crankshaft of an internal combustion engine illustrated in Fig. 25, in which the temperature of the housing split bodies rises due to the running of the internal combustion engine, and becomes a temperature during normal running time; and

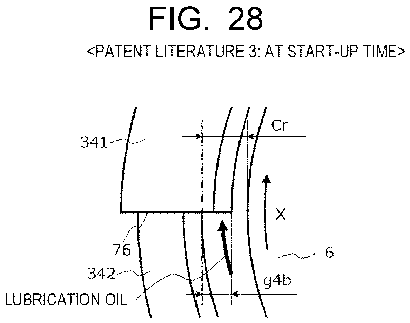

Fig. 28 is an enlarged view of gap-formed portion I in Fig. 25.

## DESCRIPTION OF THE EMBODIMENTS

Hereinafter, embodiments of the present invention will be described with reference to the drawings.

(First Embodiment)

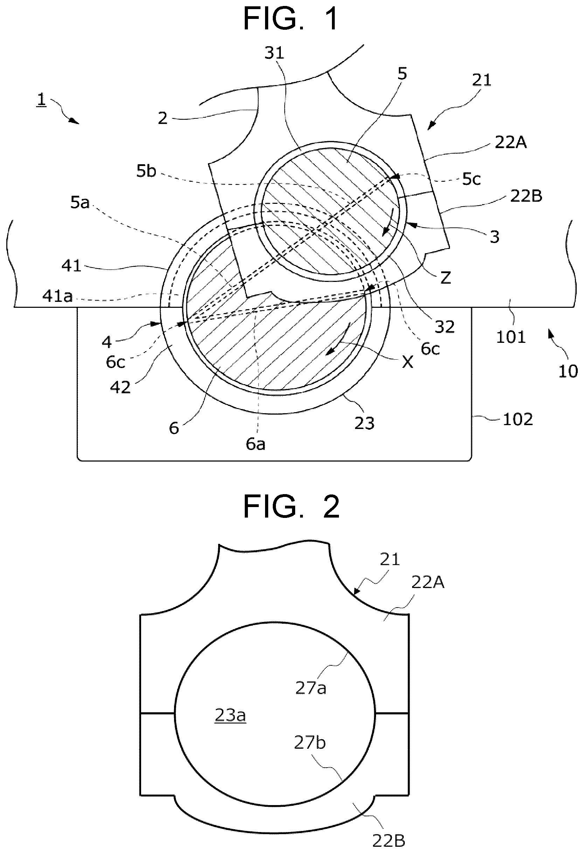

Fig. 1 is a schematically illustrates a bearing apparatus 1 for a crankshaft of an internal combustion engine. Fig. 15 illustrates a view in which a bearing housing is axially seen. The bearing apparatus 1 includes a journal portion 6 supported in a lower portion of a cylinder block, a crankpin 5 which is formed integrally with the journal portion 6 and rotates about the journal portion 6, and a connecting rod 2 which transmits reciprocating motion from the internal combustion engine to the crankpin 5. Moreover, the bearing apparatus 1 further includes, as a slide bearing which supports the crankshaft, a main bearing 4 which rotatably supports the journal portion 6, and a connecting rod bearing 3 which rotatably supports the crankpin 5.

Note that, although the crankshaft includes a plurality of j ournal portions 6 and a plurality of crankpins 5, an explanation will be given here by illustrating one journal portion 6 and one crankpin 5 in the drawings, for the convenience of

explanation. In Fig. 1, the positional relationship in the depth direction of the sheet is set such that the journal portion 6 is on a far side of the sheet and the crankpin 5 is on a near side.

The journal portion 6 is supported in a split-type bearing housing 10 consisting of a cylinder block lower portion 101 and a bearing cap 102 of the internal combustion engine, via the main bearing 4 consisting of a pair of half bearings 41 and 42. A semicylindrical bearing holding hole is formed in each of the cylinder block lower portion 101 and the bearing cap 102. The half bearing 41 is inserted into the semicylindrical bearing holding hole of the cylinder block lower portion 101, the half bearing 42 is inserted into the semicylindrical bearing holding hole of the bearing cap 102, and then the cylinder block lower portion 101 and the bearing cap 102 are fastened by a non-illustrated bolt such that the pair of half bearings 41 and 42 are held in the cylindrical bearing holding hole. An oil groove 41a is formed in the half bearing 41 on an upper side in Fig. 1 over the entire length of the inner peripheral surface. Moreover, the journal portion 6 includes a diametrically penetrating lubrication oil passage 6a, and if the journal portion 6 rotates in a direction of arrow X, inlet openings 6c at two ends of the lubrication oil passage 6a alternately communicate with the oil groove 41a of the main bearing 4.

The crankpin 5 is supported in a large end housing 21 of the connecting rod 2 via the connecting rod bearing 3 consisting of a pair of half bearings 31 and 32. As illustrated in Fig. 2, the large end housing (bearing housing) 21 is consisting of a rod side large end housing 22A and a cap side large end housing 22B. The rod side large end housing 22A and the cap side large end housing 22B include semicylindrical inner peripheral surfaces 27a and 27b, respectively, and the pair of inner peripheral surfaces 27a and 27b become a cylindrical bearing holding hole 23a when the split surfaces of the rod side large end housing 22A and the cap side large end housing 22B are abutted.

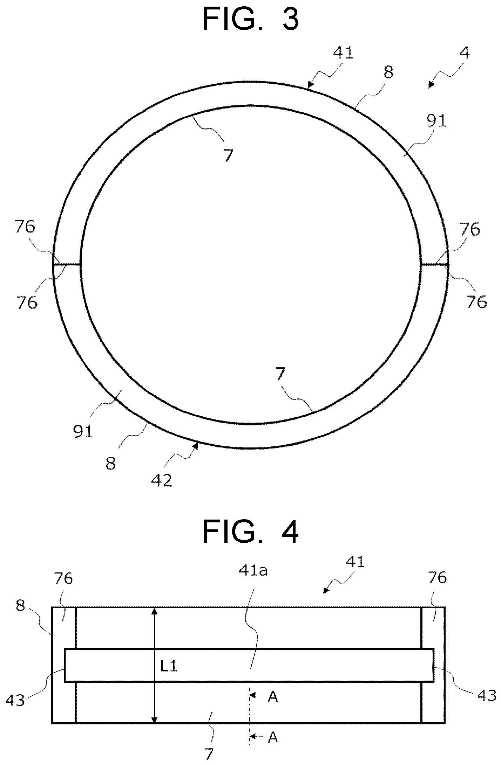

The outer circumferential length of the pair of half bearings 41 and 42 illustrated in Fig. 3 is slightly larger than the inner circumferential length of a bearing holding hole 23 of the bearing housing 10. After mounting, mutually pushing pressure is generated between outer peripheral surfaces 8 of the pair of half bearings 41 and 42 and inner peripheral surfaces 104 and 105 of the bearing holding hole 23 such that the pair of half bearings 41 and 42 are fixed to the bearing holding hole 23.

A second lubrication oil passage 5a branched from the first lubrication oil passage 6a of the journal portion 6 and passing through a crank arm portion (not illustrated) is formed. The second lubrication oil passage 5a communicates with a third lubrication oil passage 5b formed to penetrate the crankpin 5 in the diametrical direction thereof.

Therefore, as described above, lubrication oil discharged by an oil pump is fed into the oil groove 41a formed along the inner peripheral surface of the main bearing 4 through a through-hole formed in the wall of the main bearing 4 from an oil gallery formed within a cylinder block wall, and supplied to a space formed between the journal portion 6 and the main bearing 4.

On the other hand, the lubrication oil is supplied also to a space formed between the crankpin 5 and the connecting rod bearing 3 from a discharge opening 5c at the end of the third lubrication oil passage 5b by way of the first lubrication oil passage 6a, the second lubrication oil passage 5a, and the third lubrication oil passage 5b.

Hereinafter, an embodiment in which the bearing apparatus 1 of the present invention is applied to a main bearing portion is described. However, it will be appreciated that the bearing apparatus of the present invention is not limited to the application to the main bearing portion, and may be applied to a connecting rod receiving portion having a connecting rod receiving portion housing.

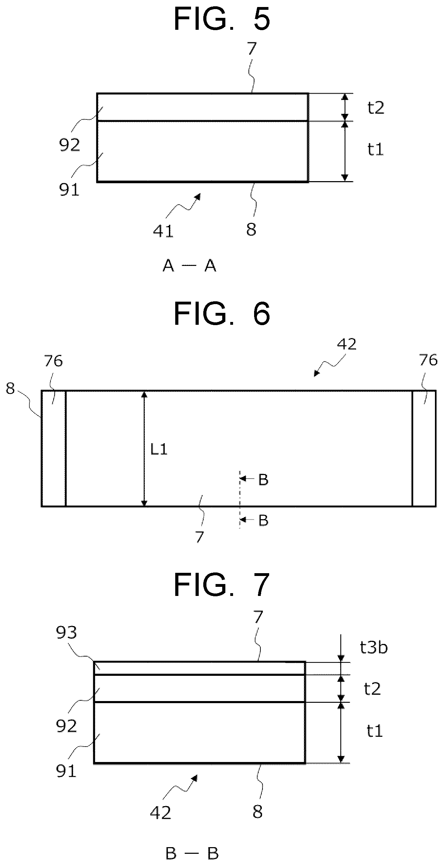

Fig. 3 illustrates a view in which the main bearing 4 consisting of the pair of half bearings 41 and 42 of the present invention with the peripheral end faces 76 being abutted on each other in an unmounted state is axially seen. Fig. 4 is a view in which the half bearing 41 illustrated in Fig. 3 is seen from an inner peripheral surface side. Fig. 5 illustrates a sectional view along line A-A of the half bearing 41 illustrated in Fig. 4. Fig. 6 is a view in which the half bearing 42 illustrated in Fig. 3 is seen from an inner peripheral surface side. Fig. 7 is a sectional view along line B-B of the half bearing 42 illustrated in Fig. 6.

As illustrated in Figs. 3 to 7, the main bearing 4 according to the present embodiment is formed by abutting and combining the peripheral end faces 76 of the pair of half bearings 41 and 42 having a semicylindrical shape into a cylindrical shape as a whole. The upper half bearing 41 includes a back metal layer 91 on the outside diameter side, and an alloy layer 92 on the inside diameter side. Moreover, the lower half bearing includes a back metal layer 91 on the outside diameter side, and an alloy layer 92 and a cover layer 93 on the inside diameter side. An Fe alloy such as hypoeutectoid steel or stainless steel can be used for the back metal layer 91. A Cu bearing alloy, an Al bearing alloy, or the like can be used for the alloy layer 92. The cover layer 93 is formed of a resin binder and a solid lubricant. Although a known resin can be used as the resin binder, it is preferable to use highly heat-resistant polyamide-imide, polyimide, polybenzoimidazole, or the like. Moreover, a resin composition obtained by mixing a highly heat-resistant resin such as polyamide-imide, polyimide, or polybenzoimidazole with a resin such as polyamide, epoxy, or polyethersulfone may be used as the resin binder. Molybdenum disulfide, tungsten disulfide, graphite, polytetrafluoroethylene, boron nitride, or the like can be used as the solid lubricant. It is preferred that the addition ratio of the solid lubricant to the resin binder is 20 to 80 volume percent. Moreover, in order to enhance abrasion resistance of the cover layer 93, the cover layer 93 may contain hard particles of ceramics, an intermetallic compound, or the like. Note that, the cover layer 93 preferably has a thermal conductivity of 3 W/m•°C or less.

As illustrated in Figs. 5 and 7, in the case of a bearing for a small internal combustion engine of a passenger

vehicle, a thickness t1 of the steel back metal layers of the half bearings 41 and 42 can be 0.7 to 1.3 mm, and a thickness t2 of the bearing alloy layer can be 0.2 to 0.7 mm. However, the thickness t1 of the steel back metal layer and the thickness t2 of the bearing alloy layer may be other dimensions.

According to one aspect of the present invention, a split-type slide bearing for a crankshaft of an internal combustion engine described below is provided.

A split-type slide bearing apparatus 1 for a crankshaft of an internal combustion engine, includes:

a cylindrical split-type slide bearing 4 including a first half bearing 41 and a second half bearing 42 which are abutted on each other; and

a split-type bearing housing 10 including a first housing split body 101 to which the first half bearing is mounted, and a second housing split body 102 to which the second half bearing is mounted, wherein a bearing holding hole 23 for holding the split-type slide bearing is formed by fastening the first housing split body and the second housing split body, wherein

each of the first half bearing and the second half bearing includes a steel back metal layer 91, and a bearing alloy layer 92,

only the second half bearing of the first half bearing and the second half bearing includes a cover layer containing a synthetic resin and a solid lubricant,

the first housing split body 101 is lower in rigidity than the second housing split body 102,

in an unmounted state where the split-type slide bearing 4 is not mounted to the split-type bearing housing 10:

- the first half bearing 41 and the second half bearing 42 have outside diameters and widths equal to each other; and
- at a symmetric position with respect to an abutment plane provided when the first half bearing 41 and the second half bearing 42 are abutted on each other, the back metal layer 91 and the bearing alloy layer 92 of the first half bearing 41 have thicknesses t1 and t2 equal to those of the back metal layer 91 and the bearing alloy layer 92 of the second half bearing 42, respectively, and the cover layer of the second half bearing 42 has a thickness t3b,

when the split-type slide bearing 4 is mounted to the split-type bearing housing 10 and the first housing split body 101 and the second housing split body 102 are fastened by a bolt, a gap g is formed in the bearing holding hole 23 in a radial direction within a fastening plane 106 between the first housing split body 101 and the second housing split body 102 due to the difference in deformation amount between the first housing split body 101 and the second housing split body 102 generated based on the difference in rigidity, and

when the first and second housing split bodies 101 and 102 are fastened by the bolt while the first and second half bearings 41 and 42 are mounted thereto, and the temperature of the first and second housing split bodies 101 and 102 rise due to the running of the internal combustion engine and becomes 40 to 80°C which is in an intermediate temperature region between start-up time and normal running, there is the difference between the thermal storage properties of the first and second half bearings 41 and 42 based on the presence of absence of the cover layer 93 because the cover layer 93 is significantly low in thermal conductivity compared to the back metal layer 91 and the bearing alloy layer 92, and the second housing split body 102 on a side of the second half bearing 42 including the cover layer 93 becomes high in temperature compared to the first housing split body 101, so that within the fastening plane 106, a gap resulting from the difference in thermal expansion amount between the first and second housing split bodies 101 and 102 is generated based on the difference in temperature in a direction to negate the gap g resulting from the difference in deformation amount between the first and second housing split bodies 101 and 102 generated based on the rigidity difference, whereby inner peripheral surfaces 7, 7 of the first and second housing split bodies 41 and 42 are brought into an aligned state.

Note that, the thermal storage property referred to here represents the resistance against decrease in temperature of the bearing housing due to the transmission of the heat of the split-type bearing housings 101 and 102 to engine oil through a bearing and the alloy layer 92 or the cover layer 93 on the bearing surface. Consequently, even if each of the split-type bearing housings 101 and 102 receives the same heat amount due to the running of the internal combustion engine, the high-rigidity-side split-type bearing housing 102 which is relatively high in thermal storage property becomes relatively high in temperature, and the low-rigidity-side split-type bearing housing 101 which is relatively low in thermal storage property becomes relatively high in temperature.

Here, the "aligned state of inner peripheral surfaces" will be described.

This alignment does not mean a geometrically perfect match between half bearing inner peripheral surfaces, but indicates a state where an expansion and deformation amount difference of bearing holding hole inside diameters on the abutment end faces of the two housing split bodies in the case that a pair of housing split bodies are fastened by a bolt is obtained by, for example, an "expansion and deformation amount difference calculation equation" shown below,

the temperature of the high-rigidity-side split-type bearing housing 102 on the second half bearing side at which a thermal expansion and deformation amount of a bearing holding hole inside diameter on the abutment end face of the second half bearing housing split body 102 generated in a direction to negate the expansion and deformation amount difference becomes equal to the expansion and deformation amount difference is obtained by, for example, a "thermal expansion amount calculation equation" shown below, as a certain target temperature in an intermediate temperature region between start-up time and normal running at which the temperature of the housing split body rises due to the running of the internal combustion engine,
a necessary thickness of the cover layer 93 for the split-type bearing housing 102 for the second half bearing housing split body 102 to reach the target temperature is obtained by, for example, a "film thickness calculation equation" shown below, and
this value is set as a thickness t3b of the cover layer of the second half bearing such that the thermal storage property of the second half bearing is increased compared to that of the first half bearing, and the temperature becomes a certain temperature in an intermediate temperature region between start-up time and normal running, at which the gap g1a is eliminated due to the thermal expansion amount of the second bearing housing split body,
assuming that an error determined by processing accuracy during the manufacture of the split-type slide bearing and the split-type bearing housing is allowed.

[Equation 1]

$$\Delta D = \{\Delta D(L) - \Delta D(H)\} \times K \quad \cdots \text{Equation 1}$$

Description of signs:

ΔD: Expansion and deformation amount difference (mm)
ΔD(L): Bearing holding hole inside diameter expansion and deformation amount of low-rigidity-side split-type bearing housing (mm)
ΔD(H): Bearing holding hole inside diameter expansion and deformation amount of high-rigidity-side split-type bearing housing (mm)
K: Relaxation coefficient due to bolting

[Equation 2]

$$\Delta D(L) = \frac{B_H(L)}{B_B + B_H(L)} \times \sigma \quad \cdots \text{Equation 2}$$

Description of signs:

BB: Coefficient relating to half bearing rigidity in combined cylinder (mm2/N)
BH(L): Coefficient relating to low-rigidity-side split-type bearing housing rigidity in combined cylinder (mm2/N)
σ: Fastening margin (half bearing outside diameter - bearing holding hole inside diameter) (mm)

[Equation 3]

$$B_B = \frac{(1-\nu_B) + (1+\nu_B)(1-2t/D)^2}{E_B \cdot 4t/D(1-t/D)} \quad \cdots \text{Equation 3}$$

Description of signs:

t: Half bearing thickness (mm)
D: Bearing holding hole inside diameter (mm)
EB: Young's modulus of half bearing (GPa)
vB: Poisson's ratio of half bearing

[Equation 4]

$$B_H(L) = \frac{(1-\nu_H(L)) + (1+\nu_H(L))(D_H(L)/D)^2}{E_H(L) \cdot \{(D_H(L)/D)^2 - 1\}} \quad \cdots \text{Equation 4}$$

Description of signs:

vH(L): Poisson's ratio of low-rigidity-side split-type bearing housing
DH(L): Outside diameter of low-rigidity-side split-type bearing housing (mm)
EH(L): Young's modulus of low-rigidity-side split-type bearing housing (GPa)

[Equation 5]

$$\Delta D(H) = \frac{B_H(H)}{B_B + B_H(H)} \times \sigma \quad \cdots \text{Equation 5}$$

Description of signs:
BH(H): Coefficient relating to high-rigidity-side split-type bearing housing rigidity in combined cylinder (mm2/N)
[Equation 6]

$$B_H(H) = \frac{(1-\nu_H(H)) + (1+\nu_H(H))(D_H(H)/D)^2}{E_H(H) \cdot \{(D_H(H)/D)^2 - 1\}} \quad \cdots \text{Equation 6}$$

Description of signs:

vH(H): Poisson's ratio of high-rigidity-side split-type bearing housing
DH(H): Outside diameter of high-rigidity-side split-type bearing housing (mm)
EH(H): Young's modulus of high-rigidity-side split-type bearing housing (GPa)

[Equation 7]

$$\Delta D = D \times (T2 - T1) \times \alpha(H) \times K \quad \cdots \text{Equation 7}$$

Description of signs:

$\Delta$D: Thermal expansion amount difference (mm)
D: Bearing holding hole inside diameter (mm)
T1: Bearing holding hole processing temperature of split-type bearing housing and reference temperature at start-up time (°C)
T2: Target temperature of high-rigidity-side bearing housing necessary to negate expansion and deformation amount difference by thermal expansion amount (°C)
$\alpha$(H): Thermal expansion coefficient of high-rigidity-side split-type bearing housing ( /°C)
K: Relaxation coefficient due to bolting

[Equation 8]

$$Q/1 = \kappa \times A \times (T2 - T1) / t3b \quad \cdots \text{Equation 8}$$

Description of signs:

Q/1: Reference heat amount per unit time necessary to raise bearing apparatus to normal temperature (J/s)
A: Slide surface area of high-rigidity-side half bearing (m2)
$\kappa$: Thermal conductivity of cover layer (W/m•°C)
t3b: Thickness of resin cover layer of high-rigidity-side half bearing (m)

[Equation 9]

$$Q = Q(H) + Q(L) + Q(S) \quad \cdots \text{Equation 9}$$

Description of signs:

Q: Reference heat amount necessary to raise bearing apparatus to normal temperature (J)
Q(H): Reference heat amount necessary to raise high-rigidity-side split-type bearing housing to reference temperature during normal running time (J)
Q(L): Reference heat amount necessary to raise low-rigidity-side split-type bearing housing to reference temperature during normal running time (J)
Q(S): Reference heat amount necessary to raise journal portion limited to bearing range to reference temperature during normal running time (J)

[Equation 10]

$$Q(H) = m(H) \times c(H) \times (T3 - T1) \quad \cdots \text{Equation 10}$$

Description of signs:

m(H): Mass of high-rigidity-side split-type bearing housing (g)
c(H): Specific heat of high-rigidity-side split-type bearing housing (J/g•°C)
T3: Reference temperature during normal running time (°C)

[Equation 11]

$$Q(L) = m(L) \times c(L) \times (T3 - T1) \quad \cdots \text{Equation 11}$$

Description of signs:

m(L): Mass of low-rigidity-side split-type bearing housing (g)
c(L): Specific heat of low-rigidity-side split-type bearing housing (J/g•°C)

[Equation 12]

$$Q(S) = m(S) \times c(S) \times (T3 - T1) \quad \cdots \text{Equation 12}$$

Description of signs:

m(S): Mass of journal portion limited to bearing range (g)
c(S): Specific heat of journal portion (J/g•°C)

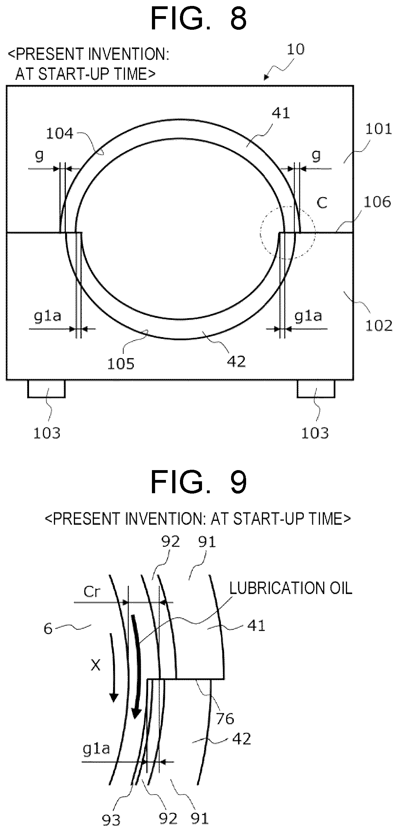

Fig. 8 is a front view illustrating a state where a split-type slide bearing consisting of the pair of half bearings 41 and 42 of the present invention is mounted within the inner peripheral surfaces 104 and 105 of the bearing holding hole of the split-type bearing housing 10 for a crankshaft of an internal combustion engine. The split-type bearing housing 10 is formed of the low-rigidity-side split-type bearing housing 101 serving as a part of an engine block made of an aluminum alloy, and the high-rigidity-side split-type bearing housing 102 as a bearing cap made of an iron alloy, and the two housing split bodies 101 and 102 are integrally fastened with bolts 103. The bearing holding hole 23 of the split-type bearing housing 10 is formed by machining a cylindrical hole having a perfect-circle shape in cross section with the housing split bodies 101 and 102 being assembled using the bolts 103 without mounting a split-type slide bearing. The figure illustrates how the split-type bearing housing 10 after the inner peripheral surfaces 104 and 105 of the bearing holding hole are formed by machining as described above is disassembled, the half bearings 41 and 42 are mounted along the inner peripheral surfaces of the housing split bodies 101 and 102, and the housing split bodies 101 and 102 are again combined integrally using the bolts 103. In an initial state before incorporated into the split-type bearing housing 10, the half bearings 41 and 42 are equal in outside diameter, and only the half bearing 42 on the high-rigidity-side split-type bearing housing side has the cover layer compared to the half bearing 41 on the low-rigidity-side split-type bearing housing side.

Meanwhile, when the housing split bodies 101 and 102 are combined integrally using the bolts 103, the inside diameters 104, 105 of the bearing holding hole may differ between the housing split bodies 101 and 102, and the gap g1a as illustrated in Fig. 16 may be generated between the abutment end faces 76 of the two half bearings 141 and 142, because the expansion and deformation amount at the abutment end of the low-rigidity-side split-type bearing housing 101

is larger than the expansion and deformation amount at the abutment end of the high-rigidity-side split-type bearing housing 102 as described above and as illustrated in Fig. 16.

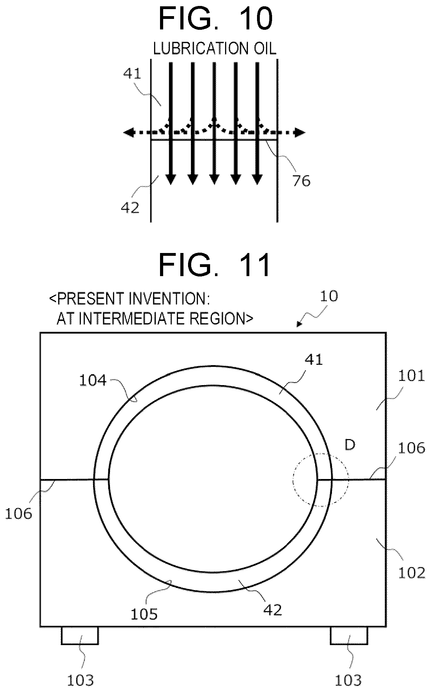

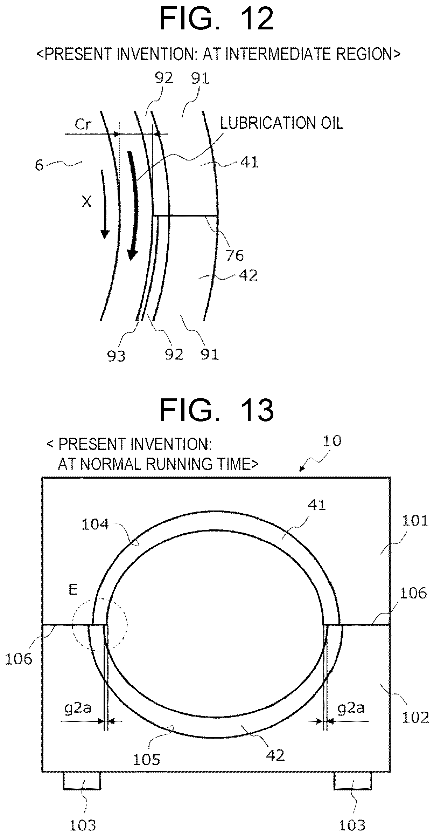

However, in the present example, the outside diameters and width dimensions of the half bearings 41 and 42 in the initial state are equal, the back metal layers 91 and the alloy layers 92 of the half bearings 41 and 42 are respectively equal in thickness at peripheral corresponding positions (i.e., at symmetric positions with respect to an abutment plane provided when the first half bearing 41 and the second half bearing 42 are abutted on each other), and only the half bearing 42 an the high-rigidity-side split-type bearing housing side has the cover layer compared to the half bearing 41 on the low-rigidity-side split-type bearing housing side (Figs. 5 and 7). Thus, the temperatures of the housing split bodies 101 and 102 rise due to the running of the internal combustion engine, the high-rigidity-side split-type bearing housing 102 having the cover layer 93 becomes high in temperature compared to the low-rigidity-side split-type bearing housing 101 at a certain temperature (Fig. 11) in an intermediate temperature region between start-up time (Fig. 8) and normal running time (Fig. 13), and a gap resulting from a thermal expansion amount difference between the two housing split bodies is generated on the abutment end faces of the pair of housing split bodies 101 and 102 based on a temperature difference in a direction to negate the gap resulting from a deformation amount difference between the two housing split bodies generated based on the rigidity difference. The present example is designed so that the gap g1a of the inner peripheral surfaces of the two half bearings 41 and 42 is thereby eliminated in such a way as to bring the inner peripheral surfaces 7 of the two half bearings on the abutment end faces 76 into an aligned state, resulting in the state of the abutment end face 76 as illustrated in Fig. 12. Then, during normal running time, the high-rigidity-side split-type bearing housing 102 further increases in temperature compared to the low-rigidity-side split-type bearing housing 101, and a gap resulting from a thermal expansion amount difference between the two housing split bodies is further generated on the abutment end faces of the pair of housing split bodies 101 and 102 based on a temperature difference in a direction to negate the gap resulting from a deformation amount difference between the two housing split bodies generated based on the rigidity difference, such that even if a gap g2a is generated, a wiping phenomenon of lubrication oil does not easily occur because the gap g2a is small in comparison with a bearing clearance Cr (Figs. 13 and 14).

Fig. 16 is a front view of a conventional example illustrating a state where a split-type slide bearing constituted of a pair of half bearings 141 and 142, in which the first and second half bearings both have a cover layer in contrast to the present invention, is mounted within the inner peripheral surfaces 104 and 105 of the bearing holding hole of the split-type bearing housing 10 for a crankshaft of an internal combustion engine. The split-type bearing housing 10 is formed of the low-rigidity-side split-type bearing housing 101 serving as a part of an engine block made of an aluminum alloy, and the high-rigidity-side split-type bearing housing 102 as a bearing cap made of an iron alloy, and the two housing split bodies 101 and 102 are integrally fastened with the bolts 103. The bearing holding hole 23 of the split-type bearing housing 10 is formed by machining a cylindrical hole having a perfect-circle shape in cross section with the housing split bodies 101 and 102 being assembled using the bolts 103 without mounting a split-type slide bearing. The figure illustrates how the split-type bearing housing 10 after the inner peripheral surfaces 104 and 105 of the bearing holding hole are formed by machining in this way is disassembled, the half bearings 141 and 142 are mounted along the inner peripheral surfaces of the housing split bodies 101 and 102, and the housing split bodies 101 and 102 are again combined integrally using the bolts 103. In an initial state before incorporated into the split-type bearing housing 10, the half bearings 141 and 142 are equal in outside diameter.

Meanwhile, when the housing split bodies 101 and 102 are combined integrally using the bolts 103, the inside diameters of the bearing holding holes 23 may differ between the housing split bodies 101 and 102, and the gap g1a as illustrated in Fig. 16 may be generated between the abutment end faces 76 of the two half bearings 141 and 142, because the expansion and deformation amount at the abutment end of the low-rigidity-side split-type bearing housing 101 is larger than the expansion and deformation amount at the abutment end of the high-rigidity-side split-type bearing housing 102 as described above and as illustrated in Fig. 16.

However, if the outside diameters and width dimensions of the half bearings 141 and 142 in the initial state are equal, back metal layers 191 and alloy layers 192 of the half bearings 141 and 142 are equal in thickness at corresponding positions in a circumferential direction, and the half bearing 141 on the low-rigidity-side split-type bearing housing side and the half bearing 142 on the high-rigidity-side split-type bearing housing side both have a cover layer 193, the temperatures of the housing split bodies 101 and 102 rise due to the running of the internal combustion engine, the high-rigidity-side split-type bearing housing 102 becomes equal in temperature to the low-rigidity-side split-type bearing housing 101 at an intermediate temperature region temperature (Fig. 17) between start-up time (Fig. 16) and normal running time (Fig. 18), and a gap resulting from a thermal expansion amount difference between the two housing split bodies is generated on the abutment end faces of the pair of housing split bodies 101 and 102 based on a thermal expansion coefficient difference in the same direction as the gap g1a resulting from a deformation amount difference between the two housing split bodies made based on the rigidity difference, such that a gap g3a is generated in the inner peripheral surfaces of the two half bearings 141 and 142. Further, since the gap g3a further increases due to a thermal expansion coefficient difference during normal running time (see Fig. 19, the gap g3b), the gap g3b becomes large in comparison with the bearing clearance Cr, and there is concern that a wiping phenomenon of lubrication oil may occur on the abutment end faces 76 of the two half

bearings 141 and 142 (Fig. 20).

Fig. 21 is a front view illustrating a state where a split-type slide bearing consisting of a pair of half bearings 241 and 242 is mounted, to set a bearing thickness difference at an abutment end, on the abutment end faces of the half bearings, when the pair of half bearings 241 and 242 are installed in a pair of housing split bodies of a split-type bearing housing having a rigidity difference as taught in JP 2010-156373 A in contrast to the present invention, within the inner peripheral surfaces 104 and 105 of the bearing holding hole of the split-type bearing housing 10 for a crankshaft of an internal combustion engine. The split-type bearing housing 10 is formed of the low-rigidity-side split-type bearing housing 101 serving as a part of an engine block made of an aluminum alloy, and the high-rigidity-side split-type bearing housing 102 as a bearing cap made of an iron alloy, and the two housing split bodies 101 and 102 are integrally fastened with the bolts 103. The bearing holding hole 23 of the split-type bearing housing 10 is formed by machining a cylindrical hole having a perfect-circle shape in cross section with the housing split bodies 101 and 102 being assembled using the bolts 103 without mounting a split-type slide bearing. The figure illustrates how the split-type bearing housing 10 after the bearing holding hole 23 is formed by machining in this way is disassembled, the half bearings 241 and 242 are mounted along the inner peripheral surfaces of the housing split bodies 101 and 102, and the housing split bodies 101 and 102 are again combined integrally using the bolts 103. In an initial state before incorporated into the split-type bearing housing 10, the half bearings 241 and 242 are equal in outside diameter.

Meanwhile, when the housing split bodies 101 and 102 are combined integrally using the bolts 103, the inside diameters of bearing holding holes 12 may differ between the housing split bodies 101 and 102, and the gap g1a may be generated between the abutment end faces 76 of the two half bearings 141 and 142, because the expansion and deformation amount at the abutment end of the low-rigidity-side split-type bearing housing 101 is larger than the expansion and deformation amount at the abutment end of the high-rigidity-side split-type bearing housing 102 as described above and as illustrated in Fig. 16. However, regarding the gap of the split-type bearing housings different in rigidity from each other, the gap g1a generated in the bearing inner peripheral surface due to a rigidity difference of the split-type bearing housings is countervailed by setting a bearing thickness difference at an abutment end on the abutment end faces of the half bearings when a pair of half bearings are installed in a pair of housing split bodies of the split-type bearing housings having a rigidity difference (Fig. 21).

However, the outside diameters and width dimensions of the half bearings 241 and 242 in the initial state are equal, the temperatures of the housing split bodies 101 and 102 rise due to the running of the internal combustion engine, the high-rigidity-side split-type bearing housing 102 becomes equal in temperature to the low-rigidity-side split-type bearing housing 101 at an intermediate temperature region temperature (Fig. 22) between start-up time (Fig. 21) and normal running time (Fig. 23), and a gap resulting from a thermal expansion amount difference between the two housing split bodies is generated on the abutment end faces of the pair of housing split bodies 101 and 102 based on a thermal expansion coefficient difference, such that a gap g2b is generated on the inner peripheral surfaces of the two half bearings 241 and 242. Further, since the gap g2b further increases due to a thermal expansion coefficient difference during normal running time (see Fig. 24, a gap g2c), the gap g2c becomes large in comparison with the bearing clearance Cr, and there is concern that a wiping phenomenon of lubrication oil may occur on the abutment end faces 76 of the two half bearings 241 and 242.

Fig. 25 is a front view illustrating a state where a split-type slide bearing consisting of a pair of half bearings 341 and 342 is mounted, to set a bearing thickness difference at an abutment end, on the abutment end faces of the half bearings, when the pair of half bearings 341 and 342 are installed in a pair of housing split bodies of a split-type bearing housing having a thermal expansion coefficient difference as taught in JP 2010-156374 A in contrast to the present invention, within the bearing holding hole 23 of the split-type bearing housing 10 for a crankshaft of an internal combustion engine. The split-type bearing housing 10 is formed of the low-rigidity-side split-type bearing housing 101 serving as a part of an engine block made of an aluminum alloy, and the high-rigidity-side split-type bearing housing 102 as a bearing cap made of an iron alloy, and the two housing split bodies 101 and 102 are integrally fastened with the bolts 103. The bearing holding hole 23 of the split-type bearing housing 10 is formed by machining a cylindrical hole having a perfect-circle shape in cross section with the housing split bodies 101 and 102 being assembled using the bolts 103 without mounting a split-type slide bearing. The figure illustrates how the split-type bearing housing 10 after the bearing holding hole 23 is formed by machining in this way is disassembled, the half bearings 41 and 42 are mounted along the inner peripheral surfaces of the housing split bodies 101 and 102, and the housing split bodies 101 and 102 are again combined integrally using the bolts 103. In an initial state before incorporated into the split-type bearing housing 10, the half bearings 341 and 342 are equal in outside diameter.

Here, when it becomes normal running time as the temperature of the split-type bearing housing rises due to the running of an internal combustion engine, the inside diameters of the bearing holding holes 12 may differ between the two housing split bodies 101 and 102, and the gap g3b as illustrated in Fig. 18 may be generated between the abutment end faces 76 of the two half bearings 141 and 142, because the expansion and deformation amount at the abutment end of the low-rigidity-side split-type bearing housing 101 is larger than the expansion and deformation amount at the abutment end of the high-rigidity-side split-type bearing housing 102 as described above and as illustrated in Fig. 18.

However, when it is normal running time as the temperature of the split-type bearing housing rises due to the running of an internal combustion engine, the gap g3b generated on the bearing inner peripheral surface due to a thermal expansion amount difference of the split-type bearing housings is countervailed because a bearing thickness difference is set at an abutment end on the abutment end face of the half bearing (Fig. 27).

Meanwhile, the outside diameters and width dimensions of the half bearings 341 and 342 in the initial state are equal, the temperatures of the housing split bodies 101 and 102 rise due to the running of the internal combustion engine, and a difference is generated, based on a thermal expansion coefficient difference, between a gap resulting from a thermal expansion amount difference between the two housing split bodies and a gap due to a bearing thickness difference, on the abutment end faces of the pair of housing split bodies 101 and 102 at an intermediate temperature region temperature (Fig. 26) between start-up time (Fig. 25) and normal running time (Fig. 27), such that a gap g4a of the inner peripheral surfaces of the two half bearings 341 and 342 is generated. Further, since the difference between the gap resulting from a thermal expansion amount difference between the two housing split bodies and the gap due to a bearing thickness difference increases due to a thermal expansion coefficient difference at start-up time (see Fig. 25, a gap g4b), the gap g4b becomes large in comparison with the bearing clearance Cr on the abutment end faces 76 of the two half bearings 341 and 342, and there is therefore concern that a wiping phenomenon of lubrication oil may occur.

The bearing holding hole inside diameter D (mm) is a dimension at the bearing holding hole processing temperature T1 of the split-type bearing housing (°C), and bearing holding hole processing is ordinarily performed in a room temperature range (20 to 25°C). Moreover, in the case of a general internal combustion engine of a passenger vehicle, the temperature at start-up time is about 20 to 25°C, and the temperature during normal running time is about 120°C. Thus, the temperature in the intermediate temperature region is beyond the temperature at start-up time, and indicates a range less than the temperature during normal running time.

In Example 1, the target temperature T2 (°C) at which the high-rigidity-side bearing housing is aligned in the intermediate temperature region of an internal combustion engine varies depending on the specification of the internal combustion engine, but is, in the case of a general internal combustion engine of a passenger vehicle, about 40 to 80°C which is in a range slightly lower than the medium value between the temperature at start-up time and the temperature during normal running time, for the reason that because the thermal expansion amounts of the housing split bodies 101 and 102 are small in a region where the temperatures of the housing split bodies 101 and 102 from the start-up time is low, the bearing clearance Cr between the inner peripheral surface of the slide bearing for a crankshaft and the crankshaft surface becomes small, the flow of lubrication oil is easily affected by a gap, wiping more easily occurs, and therefore the relaxation of the gap in a region lower in temperature is prioritized in the temperature region between start-up time and normal running time.

The thickness of the cover layer is approximately determined by the materials of the low-rigidity-side split-type bearing housing and the high-rigidity-side split-type bearing housing, and the specifications of the thickness, the outside diameter and the width dimension of the half bearing. For example, in the case of a condition that, with the combination of split-type bearing housings made of an aluminum alloy and an iron alloy, respectively, the thickness of the half bearing is 1.5 to 2.0 mm, the outside diameter is 30 to 100 mm, and the width dimension is 10 to 40 mm, the thickness of the cover layer becomes in a range between 2 μm and 12 μm. Moreover, in order for the cover layer 93 to have a thermal storage property in the thickness of the cover layer in a limited range, the thermal conductivity is preferably 3 W/m•°C or less according to Equation 8.

Moreover, the split-type bearing housings 101 and 102 relatively different in thermal expansion coefficient are fastened with the bolts 103, compressive stress perpendicular to the abutment end faces is generated in the abutment end faces 76 of the split-type bearing housings 101 and 102, and the abutment end face 76 of the split-type bearing housing 101 on the relatively low thermal expansion coefficient side becomes the resistance to the thermal expansion and deformation of the abutment end face 76 of the split-type bearing housing 102 having a relatively low thermal expansion coefficient. With the combination of split-type bearing housings made of an aluminum alloy and an iron alloy relatively different in thermal expansion coefficient, a thermal expansion and deformation amount difference of bearing holding hole inside diameters in split surfaces of the split-type bearing housings is relaxed to about one third of a thermal expansion and deformation amount difference in the case where each split-type bearing housing thermally expands in a free state. (Relaxation coefficient K of thermal expansion and deformation = 1/3)

In order to configure it in reality so that the inner peripheral surfaces of the two half bearings 41 and 42 align with each other at a certain temperature in an intermediate temperature region as described above, the real split-type bearing housings 101 and 102 (a cylinder block and a bearing cap) or a model of only a split-type bearing housing part modeled on a real one is used. While the pair of half bearings 141 and 142 of the same shape and dimension are mounted to the inside diameters 104, 105 of the bearing holding hole of the split-type bearing housings and the two half bearings are fastened with the bolts 103, a gap dimension of the inside diameter on the abutment end faces of the pair of half bearings is measured by using a measuring instrument such as a roundness measuring instrument, and the gap g1a due to a rigidity difference is obtained.

Moreover, while the pair of half bearings 141 and 142 of the same shape and dimension are mounted to the

bearing holding holes of the split-type bearing housings 101 and 102 and the two housing split bodies are fastened with the bolts 103, the high-rigidity-side split-type bearing housing is heated to the temperature in an intermediate temperature region between start-up time and normal running time of the internal combustion engine, a gap dimension of the inside diameter on the abutment end faces of the pair of half bearings is measured by using a measuring instrument such as a roundness measuring instrument, and a temperature difference between the split-type bearing housings 101 and 102 in which the gap is relaxed is obtained.

Moreover, a test is conducted with a tester modeled on real equipment by installing the half bearings 41 and 42 which are different in presence of the cover layer in the split-type bearing housings 101 and 102, a bearing back surface temperature in an intermediate temperature region between start-up time and normal running time is measured, and a cover layer thickness which causes a temperature difference between the first and second half bearings is obtained.

Using the measured values, the thickness t3b of the cover layer of the half bearing to be mounted to the relativity high-rigidity-side split-type bearing housing is preferably set to a dimensional value actually measured using the real one or the model.

Alternatively, and simply, as the thickness of the cover layer 93 obtained by Equations 1 to 12, the thickness t3b of the cover layer of the half bearing to be mounted to the high-rigidity-side split-type bearing housing may be set. In this instance, for the calculation of housing mass, it may be assumed that the housing outside diameter is 1.5 times the bearing holding hole inside diameter D and that the width of the housing is equal to a bearing width L1. Moreover, for the calculation of shaft mass, it may be assumed that the width of a shaft is equal to the bearing width L1.

(Calculation Example)

In the case of a split-type bearing housing in which the bearing holding hole dimension is 50 mm, the fastening margin is 0.1 mm, and the relaxation coefficient is 1/3 when a housing split body made of an aluminum alloy (Young's modulus 74.5 (GPa), Poisson's ratio 0.3) and a housing split body made of an iron alloy (Young's modulus 205.9 (GPa), Poisson's ratio 0.33) are fastened with bolts made of an iron alloy while the half bearing (Young's modulus 205.9 (GPa), Poisson's ratio 0.33, alloy thickness 0.3 mm, back metal thickness 1.7 mm) is incorporated, an expansion and deformation amount difference is as follows according to Equations 1 to 6:

BB = ((1-0.3)+(1+0.3)×(1-2×(1.7 mm+0.3 mm/3)/50 mm)^2)/(205.9 GPa×4×(1-2×(1.7 mm+0.3 mm/3)/50 mm×(1-(1.7 mm+0.3 mm/3)/50 mm)) = 0.064 mm2/N

BH(L) = ((1-0.33)+(1+0.33)×(50 mm×1.5/50 mm)^2)/(74.5 GPa×((50 mm×1.5/50 mm)^2-1)) = 0.039 mm2/N

BH(H) = ((1-0.3)+(1+0.3)×(50 mm×1.5/50 mm)^2)/(205.9 GPa×((50 mm×1.5/50 mm)^2-1)) = 0.014 mm2/N

$$\Delta D(L) = 0.039\ \text{mm2/N}/(0.064\ \text{mm2/N}+0.0039\ \text{mm2/N})\times 0.1\ \text{mm} = 0.038\ \text{mm}$$

ΔD(H) = 0.014 mm2/N/(0.064 mm2/N+0.014 mm2/N)×0.1 mm = 0.018 mm

Expansion and deformation amount difference = (0.038 mm-0.018 mm)×1/3 = 0.007 mm.

When the thermal expansion coefficient of the housing split body made of an iron alloy is 1.2× 10^-5/°C and the temperature at start-up time is 20°C, the target temperature T2 of the high-rigidity-side bearing housing necessary to negate an expansion and deformation amount difference by a thermal expansion amount is as follows according to Equation 7:

T2 = (0.007 mm/1000+50 mm/1000×20°C×1.2×10^-5×1/3)/(50 mm/1000×1.2×10^-5/°C×1/3) = 55°C.

When the reference temperature during normal running time is 120°C, the diameter of the journal portion is 46 mm, the width of the half bearing is 16 mm, the thermal conductivity of the cover layer is 2.4 (W/m•°C), the specific heat of the housing split body made of an iron alloy and the journal portion is 461 (J/kg•°C), the density thereof is 7.874 (g/cm3), the specific heat of the housing split body made of an aluminum alloy is 900 (J/kg•°C), and the density thereof is 2.7 (g/cm3), a thickness t3b (mm) of the cover layer 93 of the half bearing necessary to make the target temperature T2 of the high-rigidity-side split-type bearing housing is as follows according to Equations 8 to 12:

$Q(H) = (((50\ mm\times 1.5/2)^2-(50\ mm/2)^2)\times \pi/2\times 16\ mm)/1000\times 7.874\ g/cm3)/1000\times 461\ J/kg\cdot °C\times (120°C-20°C) = 7127\ J$

$Q(L) = (((50\ mm\times 1.5/2)^2-(50\ mm/2)^2)\times \pi/2\times 16\ mm)/1000\times 2.7\ g/cm3)/1000\times 900\ J/kg\cdot °C\times (120°C-20°C) = 4771\ J$

**Q(S)** = **((46** mm/2)^2×π×16 mm)/1000×7.874 g/cm3)/1000×461 J/kg•°C×(120°C-20°C) = 9652 J

$$Q = 7127\ J+4771\ J+9652\ J = 21151\ J$$

$t3b = 2.4\ W/m\cdot °C\times (50\ mm\times \pi/2\times 16\ mm)/1000000\times (55°C-20°C)/(21151\ J/1s) = 0.005\ mm.$

The thickness t3b of the cover layer of the half bearing to be mounted to the relativity high-rigidity-side split-type bearing housing 102 is set to 0.005 mm. Consequently, the thermal storage property of the high-rigidity-side split-type bearing housing 102 becomes larger compared to the low-rigidity-side split-type bearing housing 101, such that the temperature of the high-rigidity-side split-type bearing housing 102 becomes high compared to that of the low-rigidity-side split-type bearing housing 101 due to the running of the internal combustion engine when the temperature of the housing split body rises, whereby the thermal expansion amount of the high-rigidity-side split-type bearing housing 102 becomes large compared to that of the low-rigidity-side split-type bearing housing 101, and the gap g1a generated between the abutment end faces 76 of the two half bearings 41 and 42 due to a rigidity difference of the housing split bodies at start-up time is countervailed and aligned by the thermal expansion amount of the high-rigidity-side split-type bearing housing 102 at a certain temperature in an intermediate temperature region between start-up time and normal running. Accordingly, during normal running time, the high-rigidity-side split-type bearing housing 102 becomes further high in temperature compared to the low-rigidity-side split-type bearing housing 101, which further negates a thermal expansion amount difference due to a thermal expansion coefficient difference of the split-type bearing housings, such that even if the gap g2a is generated, a wiping phenomenon of lubrication oil does not easily occur because the gap g2a is small in comparison with the bearing clearance Cr (Figs. 13 and 14).

In the example, the thickness t1 of steel back metal of each of the half bearings 41 and 42, the thickness t2 of the bearing alloy layer, and the thickness t3b of the cover layer of the second half bearing 42 are constant in the circumferential direction and axial direction (width direction) (of the half bearing). However, without being limited thereto, the thickness t2 of the bearing alloy layer can be maximum in the circumferential central portions of the first and second half bearings of the half bearings 41 and 42, and continuously become smaller toward the two circumferential end sides (such that the thickness t of the half bearing can be maximum in the circumferential center, and continuously become smaller toward the two circumferential end sides).

Moreover, the example is applied to a split-type bearing housing for a crankshaft, but in the case of the bearing housing 21 of a connecting rod (Fig. 2), the present patent can be applied in such a way that, based on the housing shape difference, the split-type bearing housing 22B is a low-rigidity-side split-type bearing housing in which the first half bearing is installed, and the split-type bearing housing 22A is a high-rigidity-side split-type bearing housing in which the second half bearing is installed. In this instance, in order to take a rigidity difference due to shape into account, BH(L) may be simply multiplied by the relaxation coefficient K = 1/3.

## Claims

**1.** A split-type slide bearing apparatus (1) for a crankshaft of an internal combustion engine, comprising:

a cylindrical split-type slide bearing (4) comprising a first half bearing (41) and a second half bearing (42) which are abutted on each other; and
a split-type bearing housing (10) comprising a first housing split body (101) to which the first half bearing (41) is mounted, and a second housing split body (102) to which the second half bearing (42) is mounted, wherein a bearing holding hole (23) for holding the split-type slide bearing (4) is formed by fastening the first housing split body (101) and the second housing split body (102), wherein
each of the first half bearing (41) and the second half bearing (42) comprises a steel back metal layer (91), and a bearing alloy layer (92),
only the second half bearing (42) of the first half bearing (41) and the second half bearing (42) comprises a cover layer (93) containing a synthetic resin and a solid lubricant,

the first housing split body (101) is lower in rigidity than the second housing split body (102),
in an unmounted state where the split-type slide bearing (4) is not mounted to the split-type bearing housing (10):

- the first half bearing (41) and the second half bearing (42) have outside diameters and widths equal to each other; and
- at symmetric positions with respect to an abutment plane provided when the first half bearing (41) and the second half bearing (42) are abutted on each other, the back metal layer (91) and the bearing alloy layer (92) of the first half bearing (41) have thicknesses equal to those of the back metal layer (91) and the bearing alloy layer (92) of the second half bearing (42), respectively,

when the split-type slide bearing (4) is mounted to the split-type bearing housing (10) and the first housing split body (101) and the second housing split body (102) are fastened by a bolt, a gap (g) is formed in the bearing holding hole (23) in a radial direction within a fastening plane between the first housing split body (101) and the second housing split body (102) due to the difference in deformation amount between the first housing split body (101) and the second housing split body (102) generated based on the difference in rigidity, and
when each of the first and second housing split bodies (101, 102) is at a temperature in a range between 40°C and 80°C which range is an intermediate temperature region between start-up time and normal running time of the internal combustion engine, the second housing split body (102) on a side of the second half bearing (42) comprising the cover layer (93) is higher in temperature than the first housing split body (101) because the cover layer (93) is lower in thermal conductivity than the back metal layer (91) and the bearing alloy layer (92), whereby the first housing split body (101) and the second housing split body (102) are deformed to eliminate the gap within the fastening plane due to the difference in thermal expansion amount generated based on the difference in temperature.

**2.** The split-type slide bearing apparatus (1) according to claim 1, wherein the thickness of the cover layer (93) of the second half bearing (42) is in a range between 2 $\mu$m and 12 $\mu$m.

**3.** The split-type slide bearing apparatus (1) according to claim 1, wherein the thermal conductivity of the cover layer (93) is 3 W/m•°C or less.

## Patentansprüche

**1.** Geteilte Gleitlageranordnung (1) für eine Kurbelwelle eines Verbrennungsmotors, umfassend:

ein zylindrisches, geteiltes Gleitlager (4), das eine erste Lagerhälfte (41) und eine zweite Lagerhälfte (42) umfasst, die aneinander anliegen; und
ein geteiltes Lagergehäuse (10), das einen ersten Gehäusehälftenkörper (101), an dem die erste Lagerhälfte (41) angebracht ist, und einen zweiten Gehäusehälftenkörper (102) umfasst, an dem die zweite Lagerhälfte (42) angebracht ist, wobei durch das Zusammenfügen des ersten Gehäusehälftenkörpers (101) und des zweiten Gehäusehälftenkörpers (102) eine Lagerhalterungsbohrung (23) zum Halten des geteilten Gleitlagers (4) gebildet wird, wobei
sowohl die erste Lagerhälfte (41) als auch die zweite Lagerhälfte (42) eine Stahl-Trägermetallschicht (91) und eine Lagerlegierungsschicht (92) umfassen,
nur die zweite Lagerhälfte (42) von der ersten Lagerhälfte (41) und der zweiten Lagerhälfte (42) eine Deckschicht (93) umfasst, die ein Kunstharz und ein Festschmiermittel enthält,
der erste Gehäusehälftenkörper (101) eine geringere Steifigkeit aufweist als der zweite Gehäusehälftenkörper (102),
in einem nicht montierten Zustand, in dem das geteilte Gleitlager (4) nicht am geteilten Lagergehäuse (10) montiert ist:

- die erste Lagerhälfte (41) und die zweite Lagerhälfte (42) gleiche Außendurchmesser und Breiten aufweisen; und
- an symmetrischen Positionen in Bezug auf eine Anlageebene, die entsteht, wenn die erste Lagerhälfte (41) und die zweite Lagerhälfte (42) aneinander anliegen, die Trägermetallschicht (91) und die Lagerlegierungsschicht (92) der ersten Lagerhälfte (41) jeweils die gleichen Dicken aufweisen wie die Trägermetallschicht (91) und die Lagerlegierungsschicht (92) der zweiten Lagerhälfte (42),

wenn das geteilte Gleitlager (4) in das geteilte Lagergehäuse (10) eingebaut ist und der erste Gehäusehälftenkörper (101) sowie der zweite Gehäusehälftenkörper (102) mit einer Schraube befestigt sind, entsteht in der Lagerhalterungsbohrung (23) in radialer Richtung innerhalb einer Befestigungsebene zwischen dem ersten Gehäusehälftenkörper (101) und dem zweiten Gehäusehälftenkörper (102) ein Spalt (g) aufgrund des Unterschieds im Verformungsmaß zwischen dem ersten Gehäusehälftenkörper (101) und dem zweiten Gehäusehälftenkörper (102), der sich aus dem Unterschied in der Steifigkeit ergibt, und
wenn sich sowohl der erste als auch der zweite Gehäusehälftenkörper (101, 102) auf einer Temperatur im Bereich zwischen 40 °C und 80 °C befinden, wobei dieser Bereich einen Zwischentemperaturbereich zwischen der Startphase und der Normalbetriebsphase des Verbrennungsmotors darstellt, ist der zweite Gehäusehälftenkörper (102) auf der Seite der zweiten Lagerhälfte (42), die die Deckschicht (93) umfasst, temperaturmäßig höher als der erste Gehäusehälftenkörper (101), da die Deckschicht (93) eine geringere Wärmeleitfähigkeit aufweist als die Trägermetallschicht (91) und die Lagerlegierungsschicht (92), wodurch der erste Gehäusehälftenkörper (101) und der zweite Gehäusehälftenkörper (102) verformt werden, um den Spalt innerhalb der Befestigungsebene zu beseitigen, der durch den aufgrund des Temperaturunterschieds entstehenden Unterschied im Wärmeausdehnungsmaß verursacht wird.

**2.** Geteilte Gleitlageranordnung (1) gemäß Anspruch 1, wobei die Dicke der Deckschicht (93) der zweiten Lagerhälfte (42) in einem Bereich zwischen 2 μm und 12 μm liegt.

**3.** Geteilte Gleitlageranordnung (1) nach Anspruch 1, wobei die Wärmeleitfähigkeit der Deckschicht (93) 3 W/m•°C oder weniger beträgt.

**Revendications**

**1.** Dispositif de palier lisse de type divisé (1) pour un vilebrequin d'un moteur à combustion interne, comprenant :

un palier lisse cylindrique de type divisé (4) comprenant une première moitié de palier (41) et une deuxième moitié de palier (42) qui sont en butée l'une contre l'autre ; et
un boîtier de palier de type divisé (10) comprenant un premier corps de boîtier divisé (101) sur lequel est montée la première moitié de palier (41), et un deuxième corps de boîtier divisé (102) sur lequel est montée la deuxième moitié de palier (42), dans lequel un trou de logement du palier (23) destiné à retenir le palier lisse de type divisé (4) est formé par l'assemblage du premier corps de boîtier divisé (101) et du deuxième corps de boîtier divisé (102), dans lequel
la première moitié de palier (41) et la deuxième moitié de palier (42) comprennent chacune une couche métallique de support en acier (91) et une couche d'alliage de palier (92),
seule la deuxième moitié de palier (42), parmi la première moitié de palier (41) et la deuxième moitié de palier (42), comprend une couche de recouvrement (93) contenant une résine synthétique et un lubrifiant solide,
le premier corps de boîtier divisé (101) présente une rigidité inférieure à celle du deuxième corps de boîtier divisé (102),
à l'état non monté, lorsque le palier lisse de type divisé (4) n'est pas monté sur le boîtier de palier de type divisé (10) :

- la première moitié de palier (41) et la deuxième moitié de palier (42) ont des diamètres extérieurs et des largeurs égaux ; et
- à des positions symétriques par rapport à un plan de butée défini lorsque la première moitié de palier (41) et la deuxième moitié de palier (42) sont en butée l'une contre l'autre, la couche métallique de support (91) et la couche d'alliage de palier (92) de la première moitié de palier (41) ont des épaisseurs égales à celles de la couche métallique de support (91) et de la couche d'alliage de palier (92) de la deuxième moitié de palier (42), respectivement,

lorsque le palier lisse de type divisé (4) est monté sur le boîtier de palier de type divisé (10) et que le premier corps de boîtier divisé (101) et le deuxième corps de boîtier divisé (102) sont fixés à l'aide d'un boulon, un jeu (g) se forme dans le trou de logement du palier (23) dans une direction radiale, au sein d'un plan de fixation entre le premier corps de boîtier divisé (101) et le deuxième corps de boîtier divisé (102), en raison de la différence d'amplitude de déformation entre le premier corps de boîtier divisé (101) et le deuxième corps de boîtier divisé (102) générée par la différence de rigidité, et
lorsque chacun des premier et deuxième corps de boîtier (101, 102) se trouve à une température comprise entre

40 °C et 80 °C, cette plage correspondant à une zone de température intermédiaire entre le moment du démarrage et le fonctionnement normal du moteur à combustion interne, la température du deuxième corps de boîtier divisé (102) située du côté de la deuxième moitié de palier (42) comprenant la couche de recouvrement (93) est supérieure à celle du premier corps de boîtier divisé (101), car la couche de recouvrement (93) présente une conductivité thermique inférieure à celle de la couche métallique de support (91) et de la couche d'alliage de palier (92), ce qui entraîne une déformation du premier corps de boîtier divisé (101) et du deuxième corps de boîtier divisé (102) afin d'éliminer l'espace au sein du plan de fixation dû à la différence de dilatation thermique générée par la différence de température.

**2.** Dispositif de palier lisse de type divisé (1) selon la revendication 1, dans lequel l'épaisseur de la couche de recouvrement (93) de la deuxième moitié de palier (42) est comprise entre 2 μm et 12 μm.

**3.** Dispositif de palier lisse de type divisé (1) selon la revendication 1, dans lequel la conductivité thermique de la couche de recouvrement (93) est inférieure ou égale à 3 W/m•°C.

FIG. 1

31
5
21
1
2
22A
5b
5c
22B
5a
3
41
Z
41a
32
101
4
6c
6c
X
10
42
23
102
6
6a

FIG. 2

21
22A
27a
23a
27b
22B

FIG. 3

41
4
8
91
7
76
76
76
76
7
91
8
42

FIG. 4

41a
41
76
76
8
L1
43
43
A
A
7

FIG. 5

7
t2
92
t1
91
41
8
A — A

FIG. 6

42
76
76
8
L1
B
B
7

FIG. 7

93
7
t3b
t2
92
t1
91
42
8

B — B

# FIG. 8

<PRESENT INVENTION:
AT START-UP TIME>
10
41
104
101
g
g
C
106
g1a
g1a
102
105
42
103
103


# FIG. 9

<PRESENT INVENTION: AT START-UP TIME>
92
91
LUBRICATION OIL
Cr
6
41
X
76
42
g1a
93
92
91

FIG. 10

LUBRICATION OIL
41
76
42

FIG. 11

<PRESENT INVENTION:
AT INTERMEDIATE REGION>
10
41
104
101
D
106
106
102
105
42
103
103

FIG. 12

<PRESENT INVENTION: AT INTERMEDIATE REGION>

92
91
Cr
LUBRICATION OIL
6
41
X
76
42
93
92
91

FIG. 13

< PRESENT INVENTION:
AT NORMAL RUNNING TIME>
10
41
104
101
E
106
106
g2a
g2a
102
105
42
103
103

FIG. 14

< PRESENT INVENTION: AT NORMAL RUNNING TIME>
91
92
Cr
41
X
76
6
42
g2a
LUBRICATION OIL
91
92
93

FIG. 15

10
101
104
106
23
105
102
103
103

FIG. 16

<CONVENTIONAL:
AT START-UP TIME>
10
141
104
101
g
g
7
106
7
g1a
g1a
102
105
142
103
103

FIG. 17

<CONVENTIONAL:
AT INTERMEDIATE REGION>
10
141
104
101
106
g3a
g3a
102
105
142
103
103

# FIG. 18

<CONVENTIONAL:
AT NORMAL RUNNING TIME>
10
141
104
101
g'
g'
F
106
g3b
g3b
102
105
142
103
103

# FIG. 19

<CONVENTIONAL: AT NORMAL RUNNING TIME>
193
192
191
Cr
LUBRICATION OIL
6
141
X
76
142
g3b
193
192
191

FIG. 20

LUBRICATION OIL
141
76
142

FIG. 21

<PATENT LITERATURE 2:
AT START-UP TIME>
10
241
101
104
g
g
106
106
102
105
242
103
103

# FIG. 22

<PATENT LITERATURE 2:
AT INTERMEDIATE REGION>
10
241
104
101
106
106
g2b
g2b
102
105
242
103
103

# FIG. 23

<PATENT LITERATURE 2:
AT NORMAL RUNNING TIME>
10
241
104
101
g'
g'
H
106
106
g2c
g2c
102
105
242
103
103

# FIG. 24

<PATENT LITERATURE 2: AT NORMAL RUNNING TIME>

Cr
LUBRICATION OIL
6
241
X
76
242
g2c

# FIG. 25

<PATENT LITERATURE 3:
AT START-UP TIME>
10
341
104
101
g
g
I
106
106
g4b
g4b
102
105
342
103
103

FIG. 26

<PATENT LITERATURE 3:
AT INTERMEDIATE REGION>
10
341
104
101
106
106
g4a
g4a
102
105
342
103
103

FIG. 27

<PATENT LITERATURE 3:
AT NORMAL RUNNING TIME>
10
341
104
101
g'
g'
106
106
102
105
342
103
103

FIG. 28

<PATENT LITERATURE 3: AT START-UP TIME>

Cr
341
X
76
6
342
g4b
LUBRICATION OIL

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2010166350 A1
- JP H08277831 A
- JP 2010156373 A
- JP 2010156374 A